Europäisches Patentamt

European Patent Office

Office européen des brevets

(11) Veröffentlichungsnummer: **0 088 278**
**B1**

(12) **EUROPÄISCHE PATENTSCHRIFT**

(45) Veröffentlichungstag der Patentschrift:
13.05.87

(51) Int. Cl.⁴: **G 01 B 7/22**

(21) Anmeldenummer: 83101654.8

(22) Anmeldetag: **21.02.83**

(54) Vorrichtung zur Dehnungsmessung.

(30) Priorität: 04.03.82 DE 3207805
27.10.82 DE 3239877

(43) Veröffentlichungstag der Anmeldung:
14.09.83 Patentblatt 83/37

(45) Bekanntmachung des Hinweises auf die Patenterteilung:
13.05.87 Patentblatt 87/20

(84) Benannte Vertragsstaaten:
AT BE CH DE FR GB IT LI LU NL SE

(56) Entgegenhaltungen:
FR - A - 2 309 833
GB - A - 884 272
GB - A - 1 470 591

VDI-Berichte Nr. 313, (1978), S. 317-322

(73) Patentinhaber: **INTERATOM Gesellschaft mit beschränkter Haftung, Friedrich-Ebert-Strasse, D-5060 Bergisch Gladbach 1 (DE)**

(72) Erfinder: **Fortmann, Manfred, Dipl.-Ing., Christian-Heesen-Strasse 17, D-5063 Overath (DE)**

(74) Vertreter: **Mehl, Ernst, Dipl.-Ing. et al, Postfach 22 01 76, D-8000 München 22 (DE)**

## Beschreibung

Die vorliegende Erfindung betrifft eine Vorrichtung zur Dehnungsmessung nach dem Oberbegriff des Anspruchs 1. Zur Überwachung von auf Dehnung beanspruchten Strukturen ist es nötig, die kleinen lokalen Ausdehnungen durch geeignete Aufnehmer zu messen.

Aus der FR-A-2 309 833 ist es bekannt, bei einer zur Kontrolle von Rohrinnendimensionen vorgesehenen, kapazitiven Messsonde einen elastischen, U-förmigen Halterahmen zu verwenden. Die Kondensatorplatten sind dabei an den Innenseiten der beiden U-Schenkel angebracht. Der die beiden U-Schenkel verbindende Abschnitt des Halterahmens dient als elastischer Biegeabschnitt.

Aus VDI-Berichte Nr. 313, 1978, Seite 317 ff., «Einsatz kapazitiver Dehnungsmessstreifen für statische Messungen bei hohen Temperaturen» von M. Schulz ist ein Dehnungsmessstreifen (Bild 1) bekannt, der die im Oberbegriff des Anspruchs 1 aufgeführten Merkmale zeigt und bei dem die Dehnung einer Struktur den Abstand von zwei Platten eines Kondensators verändert und so dessen Kapazität beeinflusst. Die Platten sind an zwei übereinanderliegenden gebogenen Blechstreifen von unterschiedlicher Krümmung befestigt, wobei die Enden der Blechstreifen auf der Struktur angebracht sind.

Probleme der letztgenannten Anordnung sind unter anderem eine Beeinflussung des Messwertes durch Temperaturschwankungen, schwierig zu erfüllende Ansprüche an das Rahmenmaterial des Messstreifens, eine Hysterese bei Dehnungsänderungen und vor allem eine grosse Empfindlichkeit gegenüber Biegungen der Struktur zwischen den beiden Haltepunkten, welche den Messwert stark verändern können.

Aufgabe der vorliegenden Erfindung ist es, die genannten Nachteile zu vermeiden. Es soll ein Dehnungsmessstreifen möglichst wirtschaftlich hergestellt werden, welcher möglichst betriebssicher auch bei hohen Temperaturen einsetzbar ist und welcher den Einfluss von Biegungen der Struktur weitestgehend ausschaltet.

Zur Lösung dieser Aufgabe wird eine Vorrichtung zur Dehnungsmessung gemäss dem Anspruch 1 vorgeschlagen.

Die Vorrichtung besteht aus einem in mehrere Abschnitte unterteilten U-förmigen Halterahmen, dessen Schenkel auf den Innenseiten Kondensatorplatten tragen. Zwei äussere Abschnitte des Haltestreifens sind parallel zur zu untersuchenden Struktur ausgerichtet. Ein solcher, im Aufbau sehr einfacher Dehnungsmesser, welcher anhand der Zeichnung noch näher erläutert wird, lässt sich mit seinen äusseren Abschnitten auf der Struktur befestigen, beispielsweise durch Punktschweissen, und enthält dann einen Kondensator, dessen Kapazität sich bei Dehnungsänderungen der Struktur ebenfalls ändert. Dünne und dicke Abschnitte stehen dabei etwa rechtwinklig zueinander. Ein solcher Aufbau des Halterahmens kann entweder dadurch verwirklicht werden, dass auf einen dünnen Streifen im Bereich der dicken Abschnitte zusätzliche Bleche aufgebracht werden, beispielsweise durch Laserschweissen und der ganze Streifen dann durch Biegen und Knicken in seine Bestimmungsform gebracht wird. Eine weitere bei der Herstellung sehr günstige Lösung ist, dass dünne und dicke Abschnitte aus Einzelteilen zusammengeschweisst werden, wobei die richtige Form ohne Biegen und Knicken einzelner Materialstellen erreicht werden kann.

Im Anspruch 2 wird in weiterer Ausgestaltung der Erfindung vorgeschlagen, den Haltestreifen aus austenitischem Stahl herzustellen und die Abschnitte miteinander zu verschweissen. Die Wahl von austenitischem Stahl als Herstellungsmaterial bietet sich insbesondere dann an, wenn die Struktur ebenfalls aus diesem Material besteht. In diesem Falle befinden sich die an der Struktur befestigten Abschnitte des Haltestreifens in gutem Wärmekontakt mit der Struktur und haben die gleichen Ausdehnungseigenschaften. Dies erleichtert die Kalibrierung und Befestigung des Dehnungsmessers an der Struktur.

Im Anspruch 3 wird eine besondere Ausgestaltung der Erfindung vorgeschlagen, welche auch bei anderen, nach dem gleichen Prinzip arbeitenden Messaufnehmern von Bedeutung sein kann. Ein Teil der Messfehler bei solchen Aufnehmern rührt nämlich daher, dass die Kondensatorplatten durch unerwünschte Nebeneffekte parallel gegeneinander verschoben werden. Bei gleich grossen Kondensatorplatten verändert sich dadurch die wirksame Kondensatorfläche und damit die Kapazität des Kondensators. Dieser zu erheblichen Messfehlern führende Effekt kann dadurch vermieden werden, dass gemäss dem Anspruch 3 eine Kondensatorplatte etwas kleiner als die andere Kondensatorplatte ist. Die wirksame Kondensatorfläche wird dann durch die kleinere Kondensatorplatte bestimmt, eine Parallelverschiebung der beiden Platten gegeneinander ändert jedoch die wirksame Fläche solange nicht, wie die kleinere Platte nicht über den Rand der grösseren Platte hinausragt. Der Grössenunterschied der beiden Platten kann entsprechend den zu erwartenden Parallelverschiebungen ausreichend gross gewählt werden. Auf diese Weise kann ein erheblicher Teil der Störeffekte eliminiert werden, der nicht durch Dehnungen der Struktur sondern durch Biegung oder Scherung entsteht.

Auch im Anspruch 4 wird eine Massnahme vorgeschlagen, welche gegebenenfalls bei anderen kapazitiven Messaufnehmern von Bedeutung sein kann. Danach werden an beiden Flanken des Halterahmens Abschirmbleche befestigt und zwar so, dass sie den Kondensator vor elektromagnetischen Störungen abschirmen, ohne die Bewegung des Halterahmens jedoch zu beeinflussen. Bei der hier vorgeschlagenen Ausführungsform lassen sich solche Abschirmbleche problemlos an der Schmalseite der dickeren Abschnitte befestigen, beispielsweise auch durch Laseranschweissen.

Zur Veranschaulichung der Grösse eines erfindungsgemässen Dehnungsaufnehmers werden im Anspruch 5 bevorzugte Masse für die Dicke der einzelnen Abschnitte angegeben. Danach sind die mit der Struktur verbundenen dünnen Abschnitte etwa 0,2 mm dick, während der obere Verbindungsabschnitt etwa 0,05 mm dick ist. Die dicken Abschnitte, welche die Kondensatorplatten tragen, sind etwa 1 mm dick. Bei solchen Materialstärken ist es besonders günstig, die Verbindungen durch Laserschweissen herzustellen. Besonderes Augenmerk ist auch auf die thermischen Ausdehnungskoeffizienten der Materialien zu legen, um den Temperaturgang der Messvorrichtung klein zu halten. Die Ausdehnungskoeffizienten und Materialien der einzelnen Abschnitte sind einerseits entsprechend ihrer Länge aufeinander abzustimmen und andererseits dem verwendeten Keramikmaterial und der zu messenden Struktur anzupassen.

Im Anspruch 6 wird eine besondere Ausgestaltung der Erfindung vorgeschlagen, welche zu einer besonders günstigen Handhabung führt und insbesondere bei der Verwendung von Abschirmblechen vorteilhaft ist. Demgemäss sind die Kondensatorplatten auf Keramikformkörpern befestigt, welche in Aussparungen der dicken Halterahmenabschnitte angebracht sind. Die Zuleitungen zu den Kondensatorplatten sind durch Bohrungen durch die Keramikformkörper nach aussen geführt und dementsprechend leicht zugänglich. Eine sichere Isolation von dem Haltestreifen wird dadurch gewährleistet.

Im Anspruch 7 wird in besonderer Ausgestaltung vorgeschlagen, die Kondensatorplatten und Zuleitungen aus Platin herzustellen. Bei hohen Temperaturen und anderen ungünstigen Umgebungsbedingungen ist das sehr edle Platin besonders gut geeignet für den Langzeiteinsatz. Die Verbindungen von Metall und Keramik sind Löt- oder Klemmverbindungen und die Zuleitung der Kondensatorplatten kann an diesen beispielsweise auch durch Laserschweissen befestigt werden. Bevorzugt werden kreisrunde Kondensatorplatten eingesetzt, jedoch ist die Form auch anders wählbar.

Im Anspruch 8 werden noch zusätzlich Massnahmen angegeben, die zu einer möglichst geringen Beanspruchung der unteren dünnen Abschnitte führen. Danach werden die unteren dünnen Abschnitte mittels Schweisspunkten an der zu untersuchenden Struktur befestigt. An dem Ende der dünnen Abschnitte, welches mit den dicken Abschnitten verbunden ist, sind Dehnungseinschnitte vorhanden, welche eine Anpassung der unterschiedlichen Ausdehnungskoeffizienten ohne grosse Einflüsse auf die elastischen Eigenschaften des dünnen Abschnittes ermöglichen.

Ein Ausführungsbeispiel der Erfindung ist in der Zeichnung dargestellt und zwar zeigen

Fig. 1 eine Seitenansicht einer erfindungsgemässen Dehnungsmessvorrichtung und

Fig. 2 eine Ansicht von oben auf diese Vorrichtung.

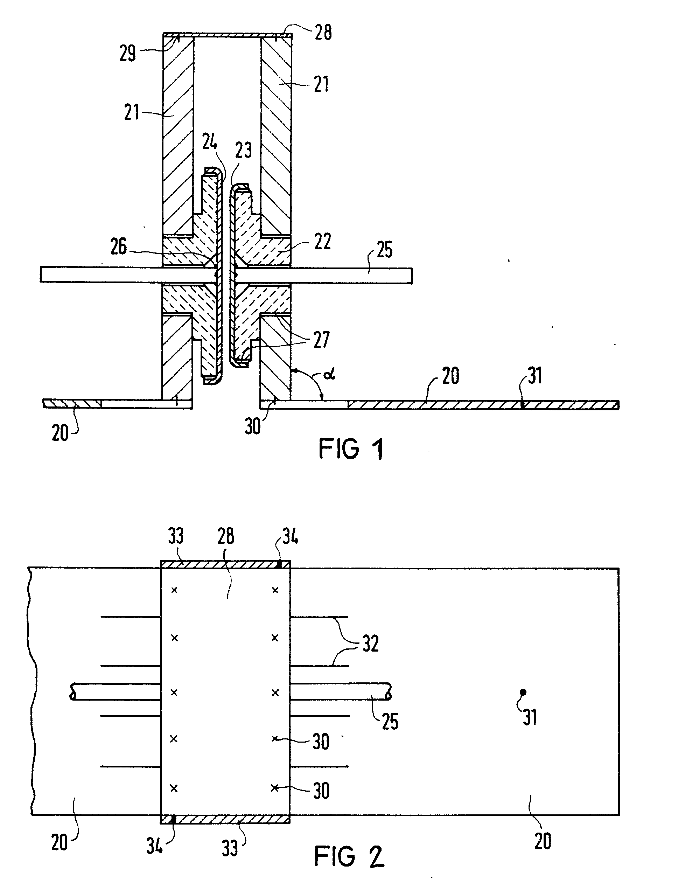

In dem in Fig. 1 und 2 gezeigten Ausführungsbeispiel sind die zwei unteren, dünnen Abschnitte 20 des Dehnungsaufnehmers, im folgenden auch «Füsse» genannt, mit Hilfe von Schweisspunkten 31 mit einer Struktur verbindbar. Senkrecht auf diese dünnen Streifen sind zwei dicke Abschnitte 21 aufgeschweisst, welche die Kondensatorplatten 23, 24 tragen. Die Kondensatorplatten sind jeweils mittels eines in die dicken Abschnitte eingelöteten keramischen Formkörpers 22 von diesen elektrisch isoliert. Die Zuleitung 25 zu den Kondensatorplatten ist durch eine Bohrung in dem Keramikformkörper 22 nach aussen geführt. Der Keramikformkörper 22 weist vorzugsweise eine stufenförmige Rotationssymmetrie auf. Die Zuleitungen 25 sind an die Kondensatorplatten 23 und 24 jeweils durch Laserschweissstellen 26 befestigt. An ihrem oberen Ende werden die dicken Abschnitte 21 durch einen dünnen Abschnitt 28, welcher ebenfalls vorzugsweise aufgeschweisst 29 ist, zusammengehalten. Dieser dünne Abschnitt 28 wirkt wie ein Gelenk und ermöglicht so das Auseinander- und Zusammenklappen der Kondensatorplatten bei Dehnung der Struktur. Die Füsse 20 der Dehnungsmessvorrichtung sind ebenfalls elastisch, und der Bereich zwischen der Befestigung 31 an der Struktur und dem dicken Abschnitt 21 wirkt ebenfalls wie ein Gelenk. Durch die Schweissverbindung 30 zwischen den beiden Abschnitten wird jedoch der Winkel α sehr nahe an der Schweissstelle konstant gehalten, was bei einer Ausdehnung der Struktur zu komplizierten Biegefiguren der Füsse führen kann. Deshalb ist es besonders günstig, einen solchen Dehnungsmessaufnehmer mit einer gewissen Vorspannung in Richtung auf den minimalen Abstand der Kondensatorplatten zu montieren. Als Alternative dazu kann auch der Winkel α durch Abschrägen der Abschnitte 21 geringfügig grösser als 90° gewählt werden. In beiden Fällen wird erreicht, dass die Füsse 20 bei Dehnung der Struktur nur in eine Richtung gekrümmt werden müssen.

Zur Entlastung bei unterschiedlichen Ausdehnungskoeffizienten der Füsse und der dicken Abschnitte 21 können Dehnungseinschnitte 32 in der Nähe der Verbindungsstelle 30 vorgesehen werden. In diesem Falle ist es günstig, die Verbindung durch eine grössere Anzahl von Punktschweissungen durchzuführen. In Fig. 1 sind die an den Flanken der Vorrichtung angebrachten Abschirmplatten der besseren Übersicht halber nicht eingezeichnet. In Fig. 2 ist jedoch zu erkennen, in welcher Weise diese Abschirmplatten angebracht werden können. Selbstverständlich dürfen diese Abschirmplatten 33 nur jeweils an einem der beiden dicken Abschnitte 21 befestigt werden. Die Verbindung kann vorzugsweise wieder durch eine Laserschweissung 34 erfolgen.

Diese Ausführungsform eignet sich für besonders hohe Ansprüche bei der Dehnungsmessung an heissen Strukturen, welche in verschiedenen Richtungen belastet werden. Besonderer Wert wurde auf die Ausschaltung von störenden Einflüssen gelegt.

Die erfindungsgemässen Messaufnehmer lassen sich mit einfachen Mitteln und gegebenenfalls in einer Grösse von weniger als 1 cm herstellen. Sie eignen sich in besonderer Weise für die Überwachung von Strukturen des Primärkreises eines Kernreaktors.

## Patentansprüche

1. Vorrichtung zur Dehnungsmessung, wobei zwei Platten (23, 24) eines Kondensators so mit einer Struktur durch einen Halterahmen (20, 21, 28) verbindbar sind, dass sich die Kapazität des Kondensators bei einer Dehnung der Struktur verändert, und wobei der Halterahmen (20, 21, 28) äussere Abschnitte (20) aufweist, die etwa parallel zur Struktur ausgerichtet sind, gekennzeichnet durch folgende Merkmale:

a) Der Halterahmen (20, 21, 28) weist drei etwa rechtwinklig zueinanderstehende innere Abschnitte (21, 28) auf, die zusammen etwa die Form eines U bilden.

b) Die zwei etwa parallelen Abschnitte (21), die die Schenkel des U bilden, tragen innen je eine Kondensatorplatte (23 bzw. 24).

c) Der dritte innere Abschnitt (28) des U und die äusseren Abschnitte (20) des Halterahmens sind dünner als die parallelen, die Schenkel des U bildenden Abschnitte (21) und dienen als elastische Biegeabschnitte.

2. Vorrichtung nach Anspruch 1, dadurch gekennzeichnet, dass der Halterahmen (20, 21, 28) aus austenitischem Stahl besteht und die Abschnitte (20, 21, 28) aneinandergeschweisst (29, 30) sind.

3. Vorrichtung nach Anspruch 1 oder 2, dadurch gekennzeichnet, dass die eine Kondensatorplatte (23) einen etwas kleineren Durchmesser als die andere Kondensatorplatte (24) hat.

4. Vorrichtung nach einem der Ansprüche 1, 2 oder 3, dadurch gekennzeichnet, dass die beiden offenen, seitlichen Seiten des U-förmigen Halterahmens (20, 21, 28) durch Abschirmbleche (33) abgedeckt sind, dass die Abdeckbleche (33) jeweils nur an einem der die Schenkel des U bildenden Abschnitte (21) befestigt sind und dass die Abdeckbleche (33) den Kondensator (23, 24) vor Störungen abschirmen, ohne die Bewegung des Halterahmens (20, 21, 28) zu beeinflussen.

5. Vorrichtung nach einem der Ansprüche 1 bis 4, gekennzeichnet durch folgende Merkmale:

a) Die an der Struktur befestigten äusseren, dünnen Abschnitte (20) des Halterahmens sind etwa 0,2 mm dick.

b) Der dritte innere, dünne Abschnitt (28) des Halterahmens ist etwa 0,05 mm dick.

c) Die dicken, die Schenkel des U bildenden Abschnitte (21) sind etwa 1 mm dick.

d) Die Verbindungen (29, 30) der Abschnitte sind lasergeschweisst.

6. Vorrichtung nach einem der vorhergehenden Ansprüche, gekennzeichnet durch folgende Merkmale:

a) Die Kondensatorplatten (23, 24) sind auf Keramikformkörpern (22) befestigt, welche in Aussparungen der Schenkel (21) angebracht sind.

b) Die Zuleitungen (25) zu den Kondensatorplatten (23, 24) sind durch Bohrungen durch die Keramikformkörper (22) nach aussen geführt.

7. Vorrichtung nach einem der vorhergehenden Ansprüche, gekennzeichnet durch folgende Merkmale:

a) Die Kondensatorplatten (23, 24) und Zuleitungen (25) sind aus Platin.

b) Die Verbindungen (27) von Metall und Keramik sind Löt- oder Klemmverbindungen.

8. Vorrichtung nach einem der vorhergehenden Ansprüche, gekennzeichnet durch folgende Merkmale:

a) Die äusseren, dünnen Abschnitte (20) des Halterahmens sind mittels Schweisspunkten (31) mit der Struktur verbindbar.

b) An dem Verbindungsende zu den dicken, die Schenkel des U bildenden Abschnitten (21) hin, weisen die äusseren, dünnen Abschnitte (20) des Halterahmens Dehnungseinschnitte (32) auf.

## Claims

1. A strain-measuring device, wherein two plates (23, 24) of a capacitor can be connected to a structure by means of a holding frame (20, 21, 28) in such a manner that the capacitance of the capacitor changes during expansion of the structure, and wherein the holding frame (20, 21, 28) has exterior sections (20) which are approximately aligned parallel to the structure, characterised by the following features:

a) The holding frame (20, 21, 28) has three approximately rectangular inner sections (21, 28) which together approximately have the shape of a U.

b) The two approximately parallel sections (21) respectively forming the arms carry a capacitor plate (23 and 24) on the inside.

c) The third inner section (28) of the U and the outer sections (20) of the holding frame are thinner than the parallel sections (21) forming the arms of the U, and serve as elastic bending sections.

2. A device as claimed in Claim 1, characterised in that the holding frame (20, 21, 28) consists of austenitic steel and the sections (20, 21, 28) are welded to one another (29, 30).

3. A device as claimed in Claim 1 or 2, characterised in that the one capacitor plate (23) has a somewhat smaller diameter than the other capacitor plate (24).

4. A device as claimed in one of Claims 1, 2 or 3, characterised in that the two open, lateral sides of the U-shaped holding frame (20, 21, 28) are covered by screening plates (33), that the screening plates (33) are respectively secured to one of the sections (21) forming the arms of the U, and that the screening plates (33) screen the capacitor (23, 24) against any interference without having an influence upon the movement of the holding frame (20, 21, 28).

5. A device as claimed in one of Claims 1 to 4, characterised by the following features:

a) The thin outer sections (20) of the holding frame which are secured to the structure have a thickness of approximately 0.2 mm.

b) The third inner thin section (28) of the holding frame has a thickness of approximately 0.05 mm.

c) The thick sections (21) forming the arms of the U have a thickness of approximately 1 mm.

d) The connections (29, 30) of the sections are laser-welded.

6. A device as claimed in one of the preceding Claims, characterised by the following features:

a) The capacitor plates (23, 24) are fixed on moulded ceramic bodies (22) which are fixed in recesses of the arms (21).

b) The supply lines (25) to the capacitor plates (23, 24) lead through bores through the moulded ceramic bodies (22) towards the outside.

7. A device as claimed in one of the preceding Claims, characterised by the following features:

a) The capacitor plates (23, 24) and supply lines (25) are made of platinum.

b) The connections (27) of metal and ceramic are soldered or clamped connections.

8. A device as claimed in one of the preceding Claims, characterised by the following features:

a) The outer thin sections (20) of the holding frame can be connected to the structure by means of welding points (31).

b) At the connection end to the thick sections (21) forming the arms of the U, the outer thin sections (20) of the holding frame possess expansion recesses (32).

**Revendications**

1. Dispositif de mesure d'allongement, dans lequel deux plaques (23, 24) d'un condensateur peuvent être reliées à une structure par un cadre de support (20, 21, 28) de telle sorte que la capacité du condensateur varie lors d'un allongement de la structure, et dans lequel le cadre de support (20, 21, 28) comporte des éléments extérieurs (20) qui sont orientés approximativement parallèlement à la structure, caractérisé par les caractéristiques suivantes:

a) le cadre de support (20, 21, 28) comporte trois éléments intérieurs (21, 28) qui sont approximativement perpendiculaires entre eux et qui déterminent ensemble approximativement la forme d'un U,

b) les deux éléments approximativement parallèles (21), qui forment les branches U, portent intérieurement une plaque respective (23 ou 24) du condensateur,

c) le troisième élément intérieur (28) du U et les éléments extérieurs (20) du cadre de support sont plus minces que les éléments parallèles (21), qui forment les branches du U, et sont utilisés en tant qu'éléments de flexion élastiques.

2. Dispositif suivant la revendication 1, caractérisé par le fait que le cadre de support (20, 21, 28) est constitué par de l'acier austénitique et que les éléments (20, 21, 28) sont soudés entre eux (29, 30).

3. Dispositif suivant la revendication 1 ou 2, caractérisé par le fait qu'une plaque (23) du condensateur possède un diamètre légèrement inférieur à l'autre plaque (24) du condensateur.

4. Dispositif suivant l'une des revendications 1, 2 ou 3, caractérisé par le fait que les deux côtés latéraux ouverts du cadre de support en forme de U, (20, 21, 28) sont recouverts par des tôles de blindage (33), que les tôles de revêtement (33) sont fixées respectivement uniquement à l'un des éléments (21) constituant les branches du U et que les tôles de revêtement (33) protègent le condensateur (23, 24) vis-à-vis de perturbations, sans influer sur le déplacement du cadre de support (20, 21, 28).

5. Dispositif suivant l'une des revendications 1 à 4, caractérisé par les caractéristiques suivantes:

a) les éléments extérieurs minces (20) du cadre de support, qui sont fixés à la structure, possèdent une épaisseur égale à environ 0,2 mm,

b) le troisième élément intérieur mince (28) du cadre de support possède une épaisseur égale à environ 0,5 mm,

c) les éléments épais (21), qui constituent les branches du U, possèdent une épaisseur égale à environ 1 mm,

d) les liaisons (29, 30) des éléments sont soudées au laser.

6. Dispositif suivant l'une des revendications précédentes, caractérisé par les caractéristiques suivantes:

a) les plaques (23, 24) du condensateur sont fixées sur des pièces de forme en céramique (22), qui sont montées dans des évidements des branches (21),

b) les conducteurs d'alimentation (25) aboutissant aux plaques (23, 24) du condensateur sont ressortis vers l'extérieur dans des perçages s'étendant à travers la pièce de forme en céramique (22).

7. Dispositif suivant l'une des revendications précédentes, caractérisé par les caractéristiques suivantes:

a) les plaques (23, 24) du condensateur et les conducteurs d'alimentation (25) sont réalisés en platine,

b) les liaisons (27) entre le métal et la céramique sont des liaisons soudées ou des liaisons serties.

8. Dispositif suivant l'une des revendications précédentes, caractérisé par les caractéristiques suivantes:

a) les éléments extérieurs minces (20) du cadre de retenue peuvent être reliés à la structure au moyen de points de soudure (31),

b) les éléments extérieurs minces (20) du cadre de support possèdent des entailles de dilatation (32) au niveau de l'extrémité de liaison avec les éléments épais (21) constituant les branches du U.

FIG 1

FIG 2